# EUROPÄISCHE PATENTSCHRIFT

(11) **EP 1 352 329 B1**
(45) Veröffentlichungstag und Bekanntmachung des Hinweises auf die Patenterteilung: **11.08.2004**
(21) Anmeldenummer: 02700205.4
(22) Anmeldetag: 15.01.2002
(51) Int. Cl.: G06F 13/38, H03M 9/00

(54) **DATENEMPFANGSSCHALTUNG ZUM EMPFANG EINES SERIELLEN EINGANGSDATENSTROMES**
DATA RECEPTION CIRCUIT FOR THE RECEPTION OF A SERIAL INPUT DATA STREAM
CIRCUIT RECEPTEUR DE DONNEES DESTINE A LA RECEPTION D'UN FLUX DE DONNEES D'ENTREE SERIE

(30) Priorität: 15.01.2001 DE 10101718
(43) Veröffentlichungstag der Anmeldung: 15.10.2003
(73) Patentinhaber: Infineon Technologies AG, 81669 München (DE)
(72) Erfinder: BÖRKER, Philipp, 10719 Berlin (DE)
(74) Vertreter: Charles, Glyndwr
(86) Internationale Anmeldenummer: PCT/EP2002/000352
(87) Internationale Veröffentlichungsnummer: WO 2002/056189

(56) Entgegenhaltungen:
- EP-A- 0 220 802
- EP-A- 0 813 153
- DE-A- 19 529 690
- US-A- 4 015 252
- US-A- 6 150 965

## Beschreibung

Die Erfindung betrifft eine Datenempfangsschaltung zum Empfang eines seriellen Eingangsdatenstromes mit einer sehr hohen Datenübertragungsrate.

Die DE 689 19 211 T2 beschreibt einen Empfänger für serielle Daten. Der Empfänger enthält Schieberegister, in die Abtastwerte eines Datenbitstroms eingelesen werden. Die Abtastpunkte liegen durch höchstens eine halbe Datenbitperiode voneinander getrennt. Ein Decoder wertet die in den Schieberegister enthaltenen Abtastewerte aus.

Die DE 195 29 690 A1 beschreibt einen Mikrocomputer. Der Mikrocomputer enthält eine serielle Eingabe/Ausgabeschaltung zum Ausgeben von Daten, wobei parallele Daten in serielle Daten und serielle Eingabedaten in parallele Daten umgewandelt werden. Der Mikrocomputer enthält eine eingebaute serielle Eingabe/Ausgabeschaltung mit einer Taktsignalversorgungseinrichtung zum Anlegen eines Übertragungstaktsignals an die serielle Eingabe/Ausgabeschaltung. Der Mikrocomputer enthält ferner eine Initialisierungseinrichtung zum Initialisieren der Taktversorgungseinrichtung in Abhängigkeit von einem Signal einer externen Schaltung.

Die DE 690 25 510 T2 beschreibt eine asynchrone Hochgeschwindigkeitsdatenschnittstelle. Die asynchrone Schnittstelle dient zur Verarbeitung von seriellen Datenrahmen, die in einem Gleichlauf von einem ersten Takt übertragen werden, wobei die Schnittstelle eine Einrichtung umfaßt, die zur seriell Seriell/Parallelumsetzung der Daten mit einem ersten Takt vorgesehen ist. Die Schnittstelle enthält ferner einen Datenpuffer sowie eine Einrichtung, die zum Füllen des Datenpuffers und den seriell/parallel umgesetzten Daten vorgesehen ist. Die asynchrone Schnittstelle enthält ferner eine weitere Einrichtung, um die Daten aus dem Puffer synchron mit einem zweiten Takt, der asynchron zu dem ersten Takt ist, zu verarbeiten, wobei die zweite Einrichtung mit der Verarbeitungsoperation beginnt, bevor die erste Einrichtung die Fülloperation abgeschlossen hat.

Das Dokument EP 0 220 802 offenbart eine Datenempfangsschaltung mit einer Datenstromtrennschaltung, einer Referenztaktsignalerzeugungsschaltung, einer Verzögerungsschaltung und einer asynchron getakteten Registerbank.

Mit zunehmender Übertragungsrate werden Daten bzw. Informationen in immer kürzerer Zeit über einen Übertragungskanal übertragen. Je höher die Datenübertragungsrate ist, desto höher ist allerdings der schaltungstechnische Aufwand für die Datenempfangsschaltung zum Empfang des mit der hohen Datenübertragungsrate empfangenen Eingangsdatenstromes. Die herkömmlichen Datenempfangsschaltungen, die einen seriellen Eingangsdatenstrom mit einer sehr hohen Datenübertragungsrate empfangen können, haben aufgrund ihrer schaltungstechnischen Komplexität darüber hinaus einen hohen Leistungsverbrauch.

Es ist daher die Aufgabe der vorliegenden Erfindung, eine Datenempfangsschaltung zum Empfangen eines seriellen Eingangsdatenstromes mit einer hohen Datenübertragungsrate zu schaffen, die einen geringen schaltungstechnischen Aufwand aufweist.

Diese Aufgabe wird erfindungsgemäß durch eine Datenempfangsschaltung mit den im Patentanspruch 1 angegebenen Merkmalen gelöst.

Weitere vorteilhafte Ausgestaltungen der erfindungsgemäßen Datenempfangsschaltung sind in den Unteransprüchen angegeben.

Die Erfindung schafft eine Datenempfangsschaltung zum Empfang eines seriellen Eingangsdatenstromes mit einer hohen Datenübertragungsrate, wobei die Datenempfangsschaltung aufweist:
eine Datenstromtrennschaltung zur Trennung des seriellen Eingangsdatenstromes in mehrere getrennte Datenströme mit herabgesetzter Datenübertragungsrate,
eine Referenztaktsignalerzeugungsschaltung zur Erzeugung eines Referenztaktsignals, dessen Taktfrequenz der Datenübertragungsrate der getrennten Datenströme entspricht,
einer Verzögerungsschaltung mit einer Verzögerungsgliedkette, die aus mehreren in Reihe geschalteten Verzögerungsgliedern besteht, wobei das erste Verzögerungsglied der Verzögerungsgliedkette das erzeugte Referenztaktsignal empfängt und jedes Verzögerungsglied ein verzögertes Referenztaktsignal über einen Signalausgang der Verzögerungsschaltung abgibt,
einem ersten asynchron getakteten Registerfeld, das aus mehreren Registerbänken besteht, wobei jede Registerbank des ersten Registerfeldes durch einen zugehörigen getrennten Datenstrom asynchron getaktet wird und zum Zwischenspeichern eines Signalwechsels des getrennten Datenstromes die verzögerten Referenztaktsignale von der Verzögerungsgliedkette einliest,
einem zweiten synchron getakteten Registerfeld, das aus mehreren Registerbänken besteht, wobei jede Registerbank des zweiten Registerfeldes durch das Referenztaktsignal synchron getaktet den Registerinhalt einer zugehörigen Registerbank des ersten Registerfeldes einliest und zwischenspeichert, und
einer synchron getakteten Logikschaltung, die den in dem zweiten Registerfeld zwischengespeicherten Registerinhalt zur Rekonstruktion des seriellen Eingangsdatenstromes auswertet.

Ein Vorteil der erfindungsgemäßen Datenempfangsschaltung besteht darin, dass die Datenstromtrennschaltung eine sehr geringe Eingangskapazität aufweist und somit ein Eingangssignal mit einer sehr hohen Datenfrequenz durch die erfindungsgemäße Datenempfangsschaltung empfangen werden kann. Hierdurch ist es möglich, einen seriellen Eingangsdatenstrom mit einer sehr hohen Datenübertragungsrate von beispielsweise 10 Gbit/sek zu empfangen.

Ein weiterer Vorteil der erfindungsgemäßen Datenempfangsschaltung besteht darin, dass nicht das empfangene hochfrequente Eingangssignal über die Verzögerungsgliedkette der Verzögerungsschaltung geführt wird wie in herkömmlichen Emfängeranordnungen, sondern ein relativ niederfrequentes Referenztaktsignal, wodurch eine wesentlich geringere Störung der Datenempfangsschaltung durch sogenannten Pattern-noise erfolgt. Bei der Pattern-noise-Störung stört sich das unregelmäßige, empfangene Datensignal selbst. Pattern-noise kann bei der erfindungsgemäßen Datenempfangsschaltung nicht auftreten, da das Referenztaktsignal, das an die Verzögerungsgliedkette angelegt wird, ein regelmäßiges, relativ niederfrequentes Signal ist.

Ein weiterer Vorteil der erfindungsgemäßen Datenempfangsschaltung besteht darin, dass die schaltungstechnische Struktur der Datenempfangsschaltung modular aus ähnlichen Bausteinen aufgebaut werden kann und somit einfach schaltungstechnisch implementierbar bzw. integrierbar ist.

Ein weiterer Vorteil der erfindungsgemäßen Datenempfangsschaltung besteht darin, dass die synchron getaktete Logikschaltung zur Rekonstruktion des seriellen Eingangsdatenstromes mit einer automatischen Synthese (VHDL) umsetzbar ist, so dass eine einfache Portierung auf andere Technologien mit einem geringen Entwicklungsaufwand gewährleistet ist.

Bei einer bevorzugten Ausführungsform der erfindungsgemäßen Datenempfangsschaltung weist jeder Registerbank des ersten asynchron getakteten Registerfeldes ein erstes Register zum Zwischenspeichern einer steigenden Signalflanke des zugehörigen getrennten Datenstromes und ein zweites Register zum Zwischenspeichern einer abfallenden Signalflanke des zugehörigen getrennten Datenstromes auf.

Bei einer bevorzugten Ausführungsform der erfindungsgemäßen Datenempfangsschaltung weist jede Registerbank des zweiten synchron getakteten Registerfeldes zwei Register auf, die bei einer steigenden Signalflanke des Referenztaktsignals den Registerinhalt der beiden Register der zugehörigen Registerbank innerhalb des ersten Registerfeldes einlesen.

Die Register des ersten Registerfeldes und des zweiten Registerfeldes bestehen vorzugsweise aus mehreren flankengetriggerten D-Flip-Flops.

Die Anzahl der flankengetriggerten D-Flip-Flops der Register in dem ersten Registerfeld und in dem zweiten Registerfeld ist vorzugsweise gleich der Anzahl der in Reihe geschalteten Verzögerungsglieder der Verzögerungsgliedkette.

Die Takteingänge der D-Flip-Flops der ersten Register aller Registerbänke innerhalb des ersten asynchron getakteten Registerfeldes empfangen vorzugsweise einen von der Datenstromtrennschaltung abgegebenen getrennten Datenstrom.

Die Takteingänge der D-Flip-Flops der zweiten Register aller Registerbänke innerhalb des ersten asynchron getakteten Registerfeldes empfangen vorzugsweise invertiert einen von der Datenstromtrennschaltung abgegebenen getrennten Datenstrom.

Die Dateneingänge der D-Flip-Flops des ersten Registers und des zweiten Registers einer Registerbank des asynchron getakteten ersten Registerfelds sind vorzugsweise mit einem zugehörigen Signalausgang der Verzögerungsschaltung verbunden.

Die Takteingänge der D-Flip-Flops der Register aller Registerbänke innerhalb des zweiten synchron getakteten Registerfeldes empfangen vorzugsweise das erzeugte Referenztaktsignal.

Die Dateneingänge der D-Flip-Flops des ersten Registers einer Registerbank in dem zweiten synchron getakteten Registerfeld sind vorzugsweise mit Datenausgängen der D-Flip-Flops des ersten Registers in einer zugehörigen Registerbank in dem ersten asynchron getakteten Registerfeld verbunden.

Die Dateneingänge der D-Flip-Flops des zweiten Registers einer Registerbank in dem zweiten synchron getakteten Registerfeld sind vorzugsweise mit Datenausgängen der D-Flip-Flops des zweiten Registers in einer zugehörigen Registerbank in dem ersten asynchron getakteten Registerfeld verbunden.

Die Datenausgänge der D-Flip-Flops der Registerbänke des zweiten synchron getakteten Registerfeldes sind vorzugsweise mit der synchron getakteten Logikschaltung verbunden.

Bei einer besonders bevorzugten Ausführungsform der erfindungsgemäßen Datenempfangsschaltung besteht die Datenstromtrennschaltung aus mehreren kaskadenförmig in mehreren Trennstufen verschalteten Datenstromtrennschaltungselementen, wobei die Datenübertragungsrate des seriellen Eingangsdatenstromes mit jeder Trennstufe halbiert wird.

Die Anzahl der getrennten Datenströme beträgt vorzugsweise 2^{k}, wobei k die Anzahl der Trennstufen ist.

Die Verzögerungsgliedkette besteht bei einer bevorzugten Ausführungsform der erfindungsgemäßen Datenempfangsschaltung aus mehreren in Reihe geschalteten Invertern mit einstellbarer Signallaufzeit.

Dabei ist die Anzahl der in Reihe geschalteten Verzögerungsglieder vorzugsweise gleich dem Verhältnis zwischen der Taktperiode des Referenztaktsignals und der Signallaufzeit eines Verzögerungsgliedes.

Die Signallaufzeit eines Verzögerungsgliedes ist vorzugsweise nicht größer als die Zeitdauer eines empfangenen Datenbits des seriellen Eingangsdatenstromes.

Die Signallaufzeit eines Verzögerungsgliedes beträgt vorzugsweise ein Viertel der Zeitdauer eines empfangenen Datenbits des seriellen Eingangsdatenstroms.

Die Referenztaktsignalerzeugungsschaltung der erfindungsgemäßen Datenempfangsschaltung weist vorzugsweise einen niederfrequenten Oszillator auf, der mit einer niedrigen Frequenz schwingt, die der Datenübertragungsrate der getrennten Datenströme entspricht.

Bei einer alternativen Ausführungsform weist die Referenztaktsignalerzeugungsschaltung einen hochfrequenten Oszillator auf, der mit einer hohen Frequenz schwingt, und einen Frequenteiler, der die hohe Frequenz auf eine niedrige Frequenz herunterteilt, die der Datenübertragungsrate der getrennten Datenströme entspricht.

Bei dem Oszillator handelt es sich vorzugsweise um einen spannungsgesteuerten Oszillator.

Das durch die Referenztakterzeugungsschaltung erzeugte Referenztaktsignal weist vorzugsweise eine konstante Phasendifferenz zu dem seriellen Eingangsdatenstrom auf.

Die Referenztaktsignalerzeugungseinrichtung weist bei einer bevorzugten Ausführungsform der erfindungsgemäßen Datenempfangsschaltung eine Phasendifferenz-Berechnungseinheit auf, die die Phasendifferenz zwischen dem Referenztaktsignal und dem seriellen Eingangsdatenstrom berechnet und ein digitales Phasendifferenzsignal abgibt.

Das digitale Phasendifferenzsignal wird dabei vorzugsweise durch ein digitales Filter zur Signalstabilsierung gefiltert.

Das gefilterte digitale Phasendifferenzsignal wird vorzugsweise durch einen Digital/Analog-Wandler in eine analoge Oszillatorsteuerspannung für den spannngsgesteuerten Oszillator der Referenzsignalerzeugungsschaltung umgewandelt, wobei der spannungsgesteuerte Oszillator zur Minimierung der Phasendifferenz zwischen dem Referenztaktsignal und dem seriellen Eingangsdatenstrom in Abhängigkeit von der angelegten Oszillatorsteuerspannung mit einer veränderten Frequenz schwingt.

Bei einer besonders bevorzugten Ausführungsform der erfindungsgemäßen Datenempfangsschaltung weist die Logikschaltung eine Thermometercodierschaltung zur Thermometercodierung der von den Signalausgängen der Verzögerungsglieder abgegebenen verzögerten Referenztaktsignale auf.

Die Logikschaltung verknüpft vorzugsweise die Registerinhalte der Register des zweiten Registerfeldes zur Rekonstruktion des seriellen Eingangsdatenstromes kaskadenförmig logisch XOR.

Die Verzögerungsschaltung der erfindungsgemäßen Datenempfangsschaltung führt vorzugsweise eine Phasenkopplung zwischen dem verzögerten Referenztaktsignal des letzten Verzögerungsgliedes der Verzögerungsgliedkette und dem Referenzsignal des Eingangssignals des ersten Verzögerungsgliedes der Verzögerungsgliedkette durch.

Dabei weist die Verzögerungsschaltung vorzugsweise einen Phasendetektor auf, dessen erster Signaleingang an den Signalausgang des ersten Verzögerungsgliedes angeschlossen ist, dessen zweiter Signaleingang an den Signalausgang des letzten Verzögerungsgliedes angeschlossen ist und an dessen Ausgang an ein digitales Filter angeschlossen ist, das ein Steuersignal zur Steuerung der Verzögerungsgliedkette abgibt.

Bei einer besonders bevorzugten Ausführungsform der erfindungsgemäßen Datenempfangsschaltung weist die Datenstromtrennschaltung in vier Trennstufen kaskadenförmig verschaltete Datenstromtrennschaltungselemente auf, wobei die Verzögerungsgliedkette vierundsechzig Verzögerungsglieder enthält und das erste Registerfeld sowie das zweite Registerfeld jeweils sechzehn Registerbänke enthalten, wobei jede Registerbank zwei Register aufweist, die jeweils vierundsechzig D-Flip-Flops umfassen.

Die Signallaufzeit eines Verzögerungsgliedes beträgt bei einer besonders bevorzugten Ausführungsform etwa 25 psec.

Die erfindungsgemäße Datenempfangsschaltung wird vorzugsweise zum Empfang eines seriellen Datenstromes mit einer Datenübertragungsrate von 10 Gbit/sec eingesetzt.

Im weiteren werden bevorzugte Ausführungsformen der erfindungsgemäßen Datenempfangsschaltung unter Bezugnahme auf die beigefügten Figuren zur Erläuterung erfindungswesentlicher Merkmale beschrieben.

Es zeigen:
- Fig. 1: ein Blockschaltbild der erfindungsgemäßen Datenempfangsschaltung zum Empfang eines seriellen Eingangsdatenstromes mit einer hohen Datenübertragungsrate;
- Fig. 2: zeigt eine bevorzugte Ausführungsform der erfindungsgemäßen Datenempfangsschaltung zum Empfang eines seriellen Eingangsdatenstromes mit einer hohen Datenübertragungsrate.

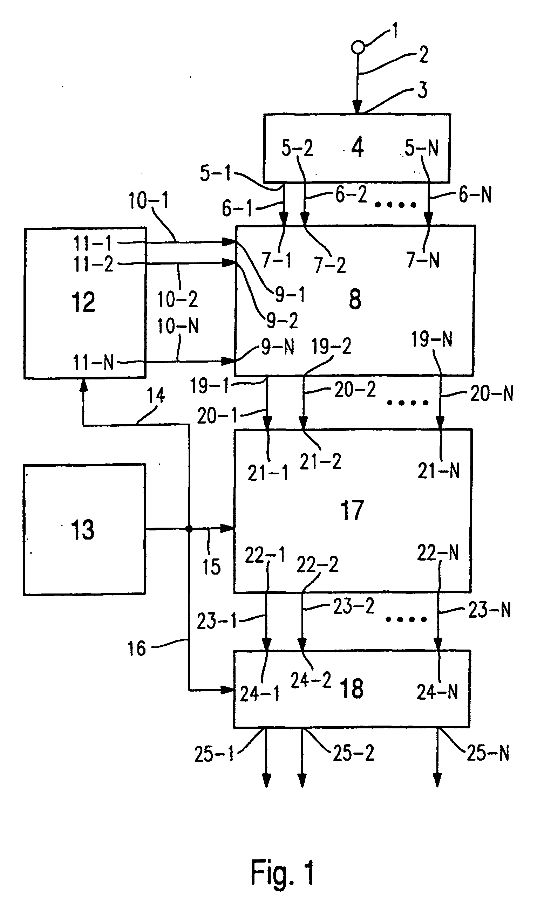

Wie man aus Fig. 1 erkennen kann, weist die erfindungsgemäße Datenempfangsschaltung einen Signaleingang 1 zum Empfang eines seriellen Eingangsdatenstromes mit einer sehr hohen Datenübertragungsrate von beispielsweise 10 Gbit/sec auf. Der empfangene serielle Eingangsdatenstrom wird über eine Leitung 2 an einem Signaleingang 3 einer Datenstromtrennschaltung zugeführt. Die Datenstromtrennschaltung führt eine Trennung des seriellen Eingangsdatenstromes in mehrere getrennte Datenströme mit herabgesetzter Datenübertragungsrate durch, wobei die getrennten Datenströme über Signalausgänge 5-1, 5-2 bis 5-N und zugehörigen Signalleitungen 6-1, 6-2 bis 6-N an Signaleingänge 7-1, 7-2, 7-N eines nachgeschalteten asynchron getakteten ersten Registerfeldes 8 abgegeben werden.

Die Datenstromtrennschaltung 4 zur Trennung des seriellen Eingangsdatenstromes besteht aus kaskadenförmig mit mehreren Trennstufen verschalteten Datenstromtrennschaltungs-Bauelementen. Dabei weist jedes Datenstromtrennschaltungselement einen Signaleingang zum Empfang eines seriellen Eingangsdatenstromes mit einer bestimmten Datenübertragungsrate, ein erstes flankengetriggertes Flip-Flop, das bei einer ansteigenden Signalflanke des serielen Eingangsdatenstromes schaltet und einen ersten seriellen Ausgangsdatenstrom mit der halben Datenübertragungsrate über einen ersten Signalausgang des Datenstromtrennschaltungselements abgibt und ein zweites flankengetriggertes Flip-Flop auf, das bei einer abfallenden Signalflanke des seriellen Eingangsdatenstromes schaltet und einen zweiten seriellen Ausgangsdatenstrom mit der halben Datenübertragungsrate über einen zweiten Signalausgang des Datenstromtrennschaltungselements abgibt.

Die in Fig. 1 dargestellte Datenstromtrennschaltung 4 enthält mehrere Datenstromtrennschaltungselemente, die in einer Baumstruktur verschaltet sind. Datenstromtrennschaltungs-Bauelemente sind dabei voll differentiell aufgebaut. Die Datenstromtrennschaltung 4 verteilt die an dem Datensignaleingang 3 auftretenden Ereignisse bzw. Signalwechsel, d.h. fallende und steigende Signalflanken bei einer bevorzugten Ausführungsform auf sechzehn Signalausgänge 5-1 bis 5-16, die einen getrennten Datenstrom mit einer herabgesetzten Datenübertragungsrate abgeben, die sechzehn Mal kleiner ist als die Datenübertragungsrate des empfangenen seriellen Datenstromes. Beträgt die Datenübertragungsrate des seriellen Eingangsdatenstromes beispielsweise 10 Gbit/sec wird von der Datenstromtrennschaltung 4 an jedem Signalausgang 5 ein getrennter Datenstrom mit einer herabgesetzten Datenübertragungsrate von 1,25 Gbit/sec abgegeben. Die Datenstromtrennschaltung 4 weist bei dieser Ausführungsform vier Trennstufen auf, die kaskadenförmig hintereinander geschaltet sind, wobei bei-jeder Trennstrufe die Datenübertragungsrate halbiert wird. Die maximale Häufigkeit von Signalwechseln bzw. Ereignissen sinkt dabei von einer Datenstromtrennschaltung mit vier Trennstufen auf ein Sechzehntel an jedem Datenausgang 5-1 bis 5-N der Datenstromtrennschaltung 4.

Die getrennten Datenströme werden in einem nachgeschalteten asynchron getakteten Registerfeld 8 zwischengespeichert. Das erste asynchron getaktete Registerfeld weist Takteingänge 9-1, 9-N zum Empfang von verzögerten Referenztaktsignalen über Leitungen 10-1 bis 10-N von Signalausgängen 11-1 bis 11-N einer Verzögerungsschaltung 12 auf.

Die Datenempfangsschaltung 4, wie sie in Fig. 1 dargestellt ist, enthält ferner eine Referenztaktsignalerzeugungsschaltung 13 zur Erzeugung eines Referenztaktsignals, dessen Taktfrequenz der Datenübertragungsrate der getrennten Datenströme entspricht, die an den Signalleitungen 6-1 bis 6-N anliegen. Die Referenztaktsignalerzeugungsschaltung 13 gibt das erzeugte Referenztaktsignal über Taktsignalleitungen 14, 15, 16 an die Verzögerungsschaltung 12, ein zweites synchron getaktetes Registerfeld 17 und an eine synchron getaktete Logikschaltung 18 ab.

Das erste asynchron getaktete Registerfeld 8, das der Datenstromtrennschaltung 4 nachgeschaltet ist, besteht aus mehreren Registerbänken, wobei jede Registerbank des ersten Registerfeldes 8 durch einen zugehörigen getrennten Datenstrom, der an den Signaleingängen 7-1 bis 7-N anliegt, getaktet wird und zum Zwischenspeichern des Zeitpunktes eines Signalwechsels des getrennten Datenstromes die verzögerten Referenztaktsignale über die Signalleitungen 10-1 bis 10-N von der Verzögerungsschaltung 12 einliest. Die Registerbänke des ersten von der Verzögerungsschaltung 12 asynchron getakteten Registerfeldes 8 sind über Datenausgänge 19-1 bis 19-N und über Datenleitungen 20-1 bis 20-N mit Signaleingängen 21-1 bis 21-N des zweiten synchron getakteten Registerfeldes 17 verbunden, die an zugehörige Registerbänke innerhalb des zweiten synchron getakteten Registerfeldes 17 angeschlossen sind. Jede Registerbank des zweiten synchron getakteten Registerfeldes 17 wird durch das von der Referenztaktsignalerzeugungsschaltung 13 generierte Referenztaktsignal synchron getaktet, wobei der Registerinhalt, der zugehörigen über die Datenleitung 20 verbundenen Registerbank des ersten Registerfeldes 8 eingelesen und in der Registerbank des zweiten Registerfeldes 17 zwischengespeichert wid. Das synchron getaktete zweite Registerfeld 17 weist Datenausgänge 22-1 bis 22-N auf, die über Datenleitungen 23-1 bis 23-N mit Dateneingängen 24-1 bis 24-N einer nachgeschalteten synchron getakteten Logikschaltung 18 verbunden sind. Die synchron getaktete Logikschaltung 18 wertet die in dem zweiten Registerfeld 17 zwischengespeicherten Registerinhalte zur Rekonstruktion des seriellen Eingangsdatenstromes an den Dateneingang 1 der erfindungsgemäßen Datenempfangsschaltung aus und gibt über die Datenausgänge 25-1 bis 25-N rekonstruierte Datenströme mit einer herabgesetzten Datenübertragungsrate zur weiteren Datenverarbeitung ab.

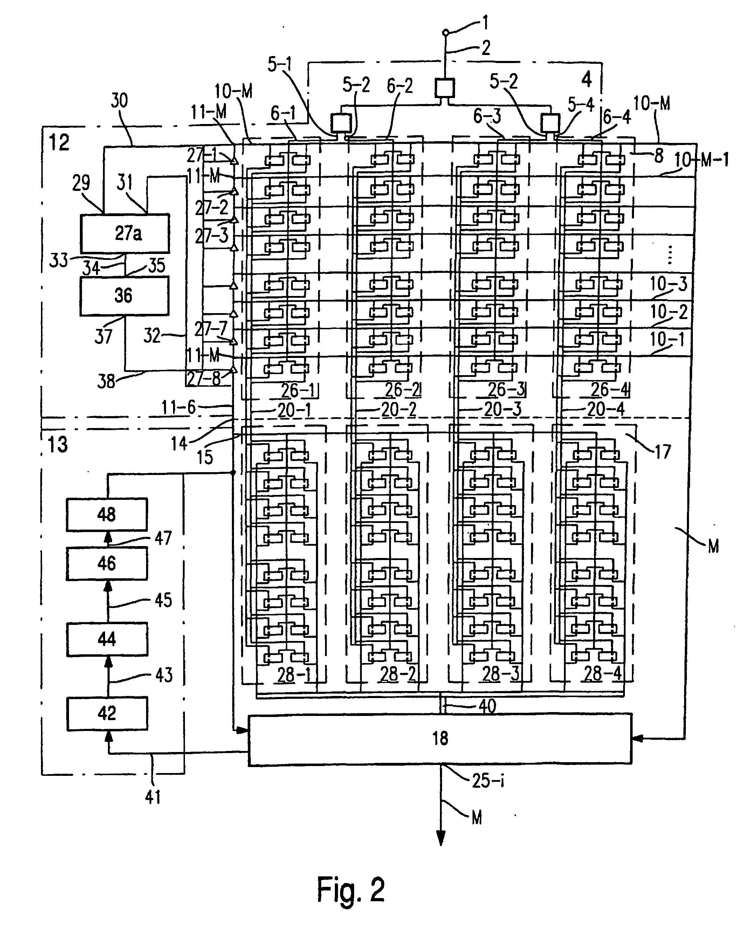

Die Fig. 2 zeigt den schaltungstechnischen Aufbau einer bevorzugten Ausführungsform der erfindungsgemäßen Datenempfangsschaltung in Detail. Bei dem in Fig. 2 dargestellten Beispiel weist die Datenstromtrennschaltung 4 zur Vereinfachung der Darstellung lediglich zwei Trennstufen auf und besitzt vier Datenausgänge 5. Die Datenstromtrennschaltung 4 gibt vier getrennte Datenströme mit einem Viertel der Datenübertragungsrate des ursprünglichen am Signaleingang 1 anliegenden seriellen Eingangsdatenstromes ab. Das erste asynchron getaktete Registerfeld 8 besteht aus mehreren Registerbänken 26-1 bis 26-4, wobei jede Registerbank 26 des ersten Registerfeldes 8 durch einen zugehörigen getrennten Datenstrom, der an den Leitungen 6-1 bis 6-4 anliegt, asynchron getaktet wird. Zum Zwischenspeichern eines Signalwechsels des getrennten Datenstromes liest jede Registerbank 26 des ersten Registerfeldes 8 ein verzögertes Referenztaktsignal von einem Signalausgang 10-1 bis 10-M der Verzögerungsschaltung 11 ein. Die Verzögerungsschaltung 12 enthält eine aus mehreren in Reihe geschalteten Verzögerungsgliedern 27-1 bis 27-M bestehende Verzögerungsgliedkette 27. An das erste Verzögerungsglied 27-1 der Verzögerungsgliedkette 27 wird das von der Referenztaktsignalerzeugungsschaltung 13 erzeugte Referenztaktsignal angelegt. Jedes Verzögerungsglied 27-i gibt über eine Leitung 10-i ein verzögertes Referenztaktsignal an das erste asynchron getaktete Registerfeld 8 ab. Die Anzahl der Verzögerungsglieder 27-i der Verzögerungsgliederkette 27 entspricht dabei dem Verhältnis zwischen der Taktperiode T_{ref} des Referenztaktsignals und der Signallaufzeit eines Verzögerungsglieds 27-i.

Beträgt die Datenübertragungsrate r_{E} des seriellen Eingangsdatenstromes beispielsweise 10 Gbit/sec und wird eine Datenstromtrennschaltung 4, wie in Fig. 2 dargestellt, mit zwei Trennstufen k = 2 implementiert, werden 2^{k}, d.h. vier getrennte Datenströme, an der Datenstromtrennschaltung 4 an das asynchron getaktete erste Registerfeld 8 abgegeben. Durch die Datenstromtrennschaltung 4 wird die Datenübertragungsrate in zwei Trennstufen geviertelt. Das von der Referenztaktsignalerzeugungsschaltung 13 erzeugte Referenztaktsignal weist eine Taktfrequenz T_{ref} auf, die der Datenübertragungsrate der getrennten Datenströme entspricht, d.h. bei dem in Fig. 2 dargestellten Beispiel erzeugt die Referenztaktsignalerzeugungsschaltung 13 einen Referenztakt von 2,5 GHz. Die Verzögerungsglieder 27-i der Verzögerungsgliedkette 27 weisen jeweils eine bestimmte Signallaufzeit auf, die nicht größer ist als die Zeitdauer eines empfangenen Datenbits des seriellen Eingangsdatenstromes. Die Signallaufzeit eines Verzögerungsgliedes 27-i ist vorzugsweise derart gewählt, dass sie ein Viertel der Zeitdauer des empfangenen Datenbits des seriellen Eingangsdatenstromes beträgt. Bei einer Datenübertragungsrate des getrennten Datenstromes von 2,5 Gbif/sec beträgt die Dauer eines Referenztaktes 400 psec. Bei den Verzögerungsgliedern handelt es sich vorzugsweise um Inverter, die beispielsweise in CMOS-Technologie hergestellt sind, wobei die Signallaufzeit bzw. Verzögerung eines Verzögerungsgliedes bzw. Puffers bei etwa 25 psec liegt. Die Anzahl der Verzögerungsglieder M berechnet sich aus dem Verhältnis zwischen der Taktperiode des Referenztaktsignals T_{ref}, d.h. in dem dargestellten Beispiel 400 psec, und der Signallaufzeit eines verwendeten Verzögerungsgliedes, d.h. 25 psec. Bei dem in Fig. 2 dargestellten Beispiel ergibt sich die Anzahl der in Reihe geschalteten Verzögerungsglieder M = 400 psec ./. 25 psec = 16. Bei dem in Fig. 2 dargestellten Beispiel sind zur Vereinfachung der Darstellung nur acht Verzögerungsglieder dargestellt.

Die Verzögerungsschaltung 12 führt eine Phasenkopplung zwischen dem verzögerten Referenztaktsignal des letzten Verzögerungsgliedes 27-M und dem Referenztaktsignal, das an dem Eingang des ersten Verzögerungsgliedes 27-1 anliegt, durch. Die Verzögerungsschaltung 12 ist als DLL-Schaltung (DLL: Delay Locked Loop) ausgebildet und weist einen Phasendetektor 27a auf, dessen erster Eingang 29 über eine Leitung 30 für den Signalausgang 11-M des letzten Verzögerungsgliedes 27-M verbunden ist und dessen zweiter Eingang 31 über eine Leitung 32 mit einem Signaleingang 11-0 des ersten Verzögerungsgliedes 27-1 verbunden ist. Der Phasendetektor 27a besitzt einen Ausgang 33, der über eine Leitung 34 mit einer Leitung 35 eines Schleifenfilters 36 verbunden ist. Das Schleifenfilter 36 gibt über einen Steuersignalausgang 37 ein Steuersignal über eine Leitung 38 an die Verzögerungsgliedkette 27 zur Steuerung der Zeitdauer der Verzögerungsgliedkette 27 ab. Die Verzögerungsglieder 27-i der Verzögerungsgliedkette 27 werden über die Steuerleitung 38 angesteuert. Die Verzögerungsgliedkette 27 besteht aus einer Reihe von Puffern oder Inverterschaltkreisen, die jeweils ein Eingangssignal mit einer gewissen Zeitverzögerung an ihren jeweiligen Ausgang übertragen. Die Zeitverzögerung der einzelnen Inverter wird dabei so gering bemessen, wie es die vorgegebene Herstellungstechnologie erlaubt. Bei einer 120 nm CMOS-Technologie liegt die minimal Verzögerungszeit eines Invertergliedes bei etwa 25 psec. Die Zeitverzögerung eines Verzögerungsgliedes ist dabei nicht größer als die Dauer eines Bits des seriellen Eingangsdatenstromes. Da die Zeitverzögerung eines Verzögerungsgliedes 27-i kleiner ist als die Dauer eines Datenbits in dem empfangenen seriellen Eingangsdatenstrom, wird ein effektives Oversampling des empfangenen seriellen Datenstromes durchgeführt, wodurch die Fehlerrate der erfindungsgemäßen Datenempfangsschaltung deutlich abgesenkt wird.

Die Verzögerungsgliedkette 27a wird mit dem von der Referenztaktsignalerzeugungsschaltung 13 erzeugten Referenztaktsignal gefüttert, dessen Frequenz der herabgesetzten Datenübertragungsrate eines getrennten Datenstromes entspricht.

Die Verzögerungsgliedkette 27a stellt gewissermaßen die Uhr der erfindungsgemäßen Datenempfangsschaltung dar. Das Referenztaktsignal wandert an den M Signalausgängen der Verzögerungsgliedkette 27 vorbei. Alle 25 psec ist das Referenztaktsignal zum nächsten Signalausgang 11-i+1 der Verzögerungsschaltung 12 weitergelaufen. Werden in einem beliebigen Augenblick innerhalb des Referenztaktes alle Signalausgänge 11-i der Verzögerungsgliedkette 27 in eine Registerbank 26 des synchron getakteten ersten Registerfeldes 8 eingelesen, so ist es möglich, zu einem späteren Zeitpunkt den exakten Zeitpunkt des Einlesevorganges aus den zwischengespeicherten Daten zu rekonstruieren.

Das asynchron getaktete Registerfeld 8 besteht bei dem in Fig. 2 dargestellten Beispiel aus vier Registerbänken 26-1 bis 26-4, wobei jede Registerbank 26 über die Leitungen 6-1 bis 6-4 asynchron durch einen getrennten Datenstrom getaktet wird und zum Zwischenspeichern eines Signalwechsels des getrennten Datenstromes die an den Signalleitungen 10-1 bis 10-M anliegenden verzögerten Referenztaktsignale von der Verzögerungsgliedkette 27 einliest.

Jede der in Fig. 2 dargestellten Registerbänke 26-1 bis 26-4 des ersten asynchron getakteten Registerfeldes enthält ein erstes Register zum Zwischenspeichern einer steigenden Signalflanke des zugehörigen getrennten Datenstromes und ein zweites Register zum Zwischenspeichern einer abfallenden Signalflanke des zugehörigen getrennten Datenstromes. Dabei besteht jedes Register aus M D-Flip-Flops. Die Takteingänge der D-Flip-Flops in dem ersten Register einer Registerbank 26, d.h. die D-Flip-Flops in der linken Spalte, empfangen den getrennten Datenstrom nicht invertierend, während die Takteingänge der D-Flip-Flops des zweiten Registers, d.h. in der rechten Spalte, den getrennten Datenstrom invertiert empfangen. Die D-Flip-Flops des ersten Registers schalten somit bei einer steigenden Signalflanke des getrennten Datenstroms, während die D-Flip-Flops des zweiten Registers bei einer abfallenden Signalflanke schalten. Währen das erste Register auf eine steigende Signalflanke des getrennten Datenstroms reagiert, reagiert das zweite Register der entsprechenden Registerbank 26 auf eine abfallende Signalflanke. Kommt es zu einem Signalwechsel in einem der Signalausgänge 5 der Datenstromtrennschaltung 4, wobei der Signalwechsel durch einen Signalwechsel in dem seriellen Eingangsdatenstrom am Signaleingang 1 der Datenempfangsschaltung verursacht wurde, wird der Zeitpunkt des Ereignisses, d.h. des Signalwechsels, durch Einlesen der Signalausgänge 11-i der Verzögerungsgliedkette 27 eindeutig bestimmt und festgehalten. Da die Datenstromtrennschaltung 4 sicherstellt, dass an einem ihrer Signalausgänge 5 höchstens ein Signalwechsel bzw. Ereignis in einem herabgesetzten Datenübertragungstakt vorkommen kann, können die asynchron getakteten Registerbänke 26 des ersten Registerfeldes 8 ohne weiteres synchronisiert werden.

Die Datenausgänge der D-Flip-Flops der Registerbänke 26 innerhalb des asynchron getakteten ersten Registerfeldes 8 werden über Datenbusse 20 an die Dateneingänge der D-Flip-Flops und zugehörigen Registerbänken 28 innerhalb des synchron getakteten zweiten Registerfeldes 17 übertragen. Die Anzahl der Registerbänke 28 innerhalb des zweiten Registerfeldes 17 entspricht der Anzahl der Registerbänke 26 innerhalb des ersten Registerfeldes 8. Die Anzahl der D-Flip-Flops innerhalb der Registerbänke 28 entspricht der Anzahl der D-Flip-Flops innerhalb der Registerbänke 26 und somit der Anzahl von Verzögerungsgliedern M der Verzögerungsgliedkette 27. Jede Registerbank 28 innerhalb des zweiten Registerfeldes 17 besteht ihrerseits aus zwei Registern. Die Takteingänge aller D-Flip-Flops innerhalb des zweiten Registerfeldes 17 sind über die Referenztaktleitung 15 von der Referenztaktsignalerzeugungsschaltung 13 mit dem Referenztaktsignal getaktet. Die Register des synchron getakteten Registerfeldes 17 lesen bei einer ansteigenden Signalflanke des Referenztaktsignals den Registerinhalt der beiden Register der zugehörigen Registerbank 26 des ersten Registerfeldes 8 über die Datenbusse 20 ein. Die Dateneingänge der D-Flip-Flops des ersten Registers einer Registerbank 28 in dem zweiten synchron getakteten Registerfeld 17 sind mit den Datenausgängen der D-Flip-Flops des ersten Registers und einer dazugehörigen Registerbank 26 des ersten asynchron getakteten Registerfeldes 8 verbunden. Die Dateneingänge der D-Flip-Flops des zweiten Registers einer Registerbank 28 in dem zweiten synchron getakteten Registerfeld 17 sind mit den Datenausgängen der D-Flip-Flops des zweiten Registers mit der zugehörigen Registerbank 26 in dem ersten asynchron getakteten Registerfeld 8 verbunden.

Die Datenausgänge der D-Flip-Flops der Registerbänke 28 des zweiten synchron getakteten Registerfeldes 17 sind über Datenbusse 40 mit der synchron getakteten Logikschaltung 18 verbunden. Die synchron getaktete Logikschaltung 18 wertet die in dem zweiten Registerfeld 17 zwischengespeicherten Registerinhalte zur Rekonstruktion des an dem Signaleingang 1 anliegenden seriellen Eingangsdatenstromes aus.

Die Referenztaktsignalerzeugungsschaltung 13 kann in verschiedener Weise implementiert werden. Bei einer ersten Ausführungsform weist die Referenztaktsignalerzeugungsschaltung 13 einen niederfrequenten Oszillator auf, der mit einer niedrigen Frequenz schwingt, die der Datenübertragungsrate der getrennten Datenströme enspricht, also bei dem in Fig. 2 gezeigten Beispiel beispielsweise 2,5 GHz.

Bei einer alternativen Ausführungsform enthält die Referenztaktsignalerzeugungsschaltung 13 einen hochfrequenten Oszillator, der mit einer hohen Frequenz schwingt und einen Frequenzteiler, der die hohe Frequenz auf eine niedrige Frequenz teilt, die der Datenübertragungsrate der getrennten Datenströme entspricht.

Bei der in Fig. 2 gezeigten bevorzugten Ausführungsform wird das Referenztaktsignal aus den empfangenen Daten zurückgewonnen. Hierdurch wird ein fester Phasenbezug zwischen dem Datenübertragungstakt der empfangenen Daten und dem Referenztakt des Referenztaktsignals erreicht.

Die Anzahl der auftretenden Signalflanken bzw. Ereignisse in M Bits des seriellen Eingangsdatenstroms liegt je nach Datensatz zwischen 0 und M. In der Logikschaltung 18 wird die Anzahl der Signalflanken bestimmt und deren relative Abweichung zur nächstliegenden Sollposition bestimmt. Die Sollposition ist dabei derjenige Ausgang 11-i der Verzögerungsgliedkette 27, an dem zum Zeitpunkt eines Signalwechels am Eingang 1 der Datenempfangsschaltung das Referenztaktsignal verzögert ankommt, wenn Phasengleichheit zwischen dem empfangenen Datensignal und dem Referenztaktsignal besteht. Falls die Signallaufzeit eines Verzögerungsgliedes 27-i ein Viertel einer Datenbitdauer beträgt, gibt es für die zeitliche Position einer Signalflanke im Datenstrom vier Möglichkeiten, wobei eine der Sollposition entspricht. Die M vorhandenen Sollpositionen in der Verzögerungsgliedkette weisen jeweils zwischen sich drei Positionen auf, an denen eine Signalflanke nur dann auftritt, wenn sie durch eine Signalstörung zu früh oder zu spät an dem Signaleingang der erfindungsgemäßen Datenempfangsschaltung ankommt oder wenn eine Phasendifferenz zwischen dem Empfangstakt und dem Referenzsignaltakt vorliegt.

Durch eine Phasendifferenz-Berechnungseinheit wird die Position vor der Sollposition vorzugsweise mit einem Wert +1 gewichtet und die Position hinter der Sollposition mit einem Wert -1 gewichtet. Die Positionen, die genau zwischen zwei Sollpositionen liegen, werden einheitlich entweder den jeweils davor oder danach liegenden Sollpositionen zugeordnet und erhalten entweder die Gewichtung +2 oder -2. Die so bestimmten Werte werden für die einzelnen Signalflanken zu einer 2+ℓdM Bit-Zahl (M mögliche Signalflanken mit einer zeitlichen Auflösung von 2 Bit) summiert und über die Anzahl der auftretenden Signalflanken gemittelt. Durch die Phasendifferenz-Berechnungseinheit wird so ein Schätzwert für die tatsächlich vorliegende Phasendifferenz berechnet. Der berechnete Phasendifferenzwert wird von der Logikschaltung 18 über eine Leitung 41 an ein digitales Filter 42 abgegeben und dort digital zur Stabilisierung gefiltert. Der digitale Ausgangswert des Filters 42 wird über eine Leitung 43 an einen Digital/Analog -Wandler 44 abgegeben und dort in eine analoge Steuerspannung umgewandelt. Die analoge Steuerspannung wird über eine Steuerleitung 45 an einen spannungsgesteuerten Oszillator 46 abgegeben, der entsprechend der Veränderung der Steuerspannung schneller oder langsamer schwingt. Das von dem Oszillator 46 abgegebene Oszillatorsignal wird über eine Leitung 47 an einen Frequenzteiler 48 abgegeben, der das gewünschte Referenztaktsignal durch Frequenzteilung erzeugt.

Die aus dem zweiten Registerfeld 17 ausgelesenen Daten werden durch die synchron getaktete Logikschaltung 18 zur Rekonstruktion des seriellen Eingangsdatenstroms ausgewertet. Die digitale Rekonstruktion der Daten erfolgt dabei in mehreren Schritten. Zunächst wird durch die Logikschaltung 18 bestimmt, an welchem der Ausgänge 5-i der Datenstromtrennschaltung 4 ein Signalwechsel stattgefunden hat. Dies geschieht beispielsweise durch einen Vergleich mit den Registerinhalten der Registerbänke im vorhergehenden Takt. Anschließend wird der in den betroffenen Registerbänken gespeicherte Zeitpunkt ausgewertet. Dieser Zeitpunkt ist durch das in der betroffenen Registerbank gespeicherte Signalabbild aller Signalausgänge 11 der Verzögerungsschaltung 12 eindeutig gekennzeichnet. Durch das Register der Registerbank ist festgelegt, ob es sich bei der am Dateneingang festgestellten Signalflanke um eine ansteigende oder eine abfallende Signalflanke handelt. Die Logikschaltung 18 ermittelt somit, zu welchem Zeitpunkt eine ansteigende oder eine abfallende Signalflanke in dem seriellen Eingangsdatenstrom aufgetreten ist. Diese flankencodierte Information wird durch die synchron getaktete Logikschaltung 18 vorzugsweise in eine pegelcodierte Signalform zurücktransformiert. Bei einer bevorzugten Ausführungsform weist die Logikschaltung 18 eine Thermometercodierschaltung zur Thermometercodierung der von den Signalausgängen 11 der Verzögerungsgliedkette 27 über die Leitungen 10 abgegebenen verzögerten Referenztaktsignale auf. Die Thermometercodierung erfolgt, um die M Ausgänge der Verzögerungsgliederkette zu komprimieren. Diese Rücktransformation wird durch die Logikschaltung 18 durchgeführt, indem sie zwischen jeder zwischengespeicherten, ansteigenden Signalflanke und der nächsten fallenden Signalflanke logisch hohe Datenbits einfügt und zwischen der abfallenden Flanke und der nächsten steigenden Signalflanke logisch niedrige Datenbits einfügt.

Die Logikschaltung 18 verknüpft bei einer alternativen Ausführungsform die über die Signalleitungen 40 erhaltenen Registerinhalte der Register des zweiten Registerfeldes 17 zur Rekonstruktion des seriellen Eingangsdatenstromes mit einer logischen XOR-Verknüpfung und gibt über M Signalausgänge rekonstruierte Datensignalströme mit einer herabgesetzten Datenübertragungsrate zur weiteren Datenverarbeitung ab.

Die Fig. 2 zeigt eine bevorzugte Ausführungsform der erfindungsgemäßen Datenempfangsschaltung. Bei alternativen Ausführungsformen wird anstatt der DLL-Schaltung 12 ein Multiphasenoszillator, insbesondere ein Ringoszillator, eingesetzt, der konstruktionsbedingt mehrere gegeneinander verschobene Taktsignale liefert. Zur Erhöhung der zeitlich verschobenen Referenztaktsignale werden vorzugsweise durch eine Phaseninterpolatorschaltung zusätzliche, zeitlich verschobene Taktsignale erzeugt.

### Bezugszeichenliste

- 1: Dateneingang
- 2: Leitung
- 3: Signaleingang
- 4: Datenstromtrennschaltung
- 5: Datenausgänge
- 6: Datenleitungen
- 7: Dateneingänge
- 8: Asynchron getaktetes Registerfeld
- 9: Eingänge
- 10: Leitungen
- 11: Signalausgänge
- 12: Verzögerungsschaltung
- 13: Referenzsignal-Erzdugungsschaltung
- 14: Taktleitung
- 15: Taktleitung
- 16: Taktleitung
- 17: Synchron getaktetes Registerfeld
- 18: Logikschaltung
- 19: Datenausgänge
- 20: Datenleitungen
- 21: Dateneingänge
- 22: Datenausgänge
- 23: Datenleitungen
- 24: Dateneingänge
- 25: Datenausgänge
- 26: Registerbänke
- 27: Verzögerungsglieder
- 28: Registerbänke
- 28a: Phasendetektor
- 29: Signaleingänge
- 30: Leitung
- 31: Signaleingang
- 32: Leitung
- 33: Ausgang
- 34: Leitung
- 35: Eingang
- 36: Digitales Schleifenfilter
- 37: Ausgang
- 38: Steuerleitung
- 39: Datenleitung
- 40: Leitung
- 41: Leitung
- 42: Digitales Filter
- 43: Leitung
- 44: Digital/Analog -Wandler
- 45: Leitung
- 46: Spannungsgesteuerter Oszillator
- 47: Leitung
- 48: Frequenzteiler

## Patentansprüche

1. Datenempfangsschaltung zum Empfang eines seriellen Eingangsdatenstromes mit einer hohen Datenübertragungsrate, wobei die Datenempfangsschaltung aufweist:
(a) eine Datenstromtrennschaltung (4) zur Trennung des seriellen Eingangsdatenstromes in mehrere getrennte Datenströme mit herabgesetzter Datenübertragungsrate;
(b) eine Referenztaktsignalerzeugungsschaltung (13) zur Erzeugung eines Referenztaktsignals, dessen Taktfrequenz der Datenübertragungsrate der getrennten Datenströme entspricht;
(c) eine Verzögerungsschaltung (12) mit einer Verzögerungsgliedkette (27), die aus mehreren in Reihe geschalteten Verzögerungsgliedern besteht, wobei das erste Verzögerungsglied (27-1) der Verzögerungsgliedkette (27) das erzeugte Referenztaktsignal empfängt und jedes Verzögerungsglied ein verzögertes Referenztaktsignal über einen Signalausgang (11) der Verzögerungsschaltung (12) abgibt;
(d) ein erstes asynchron getaktetes Registerfeld (8),
**dadurch gekennzeichnet** das aus mehreren Registerbänken (26) besteht, wobei jede Registerbank (26) des ersten Registerfeldes (8) durch einen zugehörigen getrennten Datenstrom asynchron getaktet wird und zum Zwischenspeichern eines Signalwechsels des getrennten Datenstromes die verzögerten Referenztaktsignale von der Verzögerungsschaltung (12) einliest;
(e) ein zweites synchron getaktetes Registerfeld (17), das aus mehreren Registerbänken (28) besteht, wobei jede Registerbank (28) des zweiten Registerfeldes (17) durch das Referenztaktsignal synchron getaktet den Registerinhalt einer zugehörigen Registerbank (26) des ersten Registerfeldes (8) einliest und zwischenspeichert;
(f) und eine synchron getaktete Logikschaltung (18), die den in dem zweiten Registerfeld (17) zwischengespeicherten Registerinhalt zur Rekonstruktion des seriellen Eingangsdatenstromes auswertet.

2. Datenempfangsschaltung nach Anspruch 1,
**dadurch gekennzeichnet,**
**dass** jede Registerbank (26) des ersten asynchron getaktete Registerfeldes (8) ein erstes Register zum Zwischenspeichern einer steigenden Signalflanke des zugehörigen getrennten Datenstromes und ein zweites Register zum Zwischenspeichern einer abfallenden Signalflanke des zugehörigen getrennten Datenstromes aufweist.

3. Datenempfangsschaltung nach Anspruch 2,
**dadurch gekennzeichnet,**
**dass** jede Registerbank (28) des zweiten synchron getakteten Registerfeldes (17) zwei Register aufweist, die bei einer steigenden Signalflanke des Referenztaktsignals den Registerinhalt der beiden Register der zugehörigen Registerbank (26) des ersten Registerfeldes (8) einlesen.

4. Datenempfangsschaltung nach einem der vorhergehenden Ansprüche,
**dadurch gekennzeichnet,**
**dass** die Register des ersten Registerfeldes (8) und des zweiten Registerfeldes (17) aus mehreren flankengetriggerten D-Flip-Flops bestehen.

5. Datenempfangsschaltung nach einem der vorangehenden Ansprüche,
**dadurch gekennzeichnet,**
**dass** die Anzahl der flankengetriggerten D-Flip-Flops der Register in dem ersten Registerfeld (8) und in dem zweiten Registerfeld (17) gleich der Anzahl (M) der in Reihe geschalteten Verzögerungsglieder (27-i) der Verzögerungsgliedkette (27) ist.

6. Datenempfangsschaltung nach einem der vorangehenden Ansprüche,
**dadurch gekennzeichnet,**
**dass** die Takteingänge der D-Flip-Flops der ersten Register aller Registerbänke (26) innerhalb des ersten asynchron getaktete Registerfeldes (8) einen von der Datenstromtrennschaltung (4) abgegebenen getrennten Datenstrom empfangen.

7. Datenempfangsschaltung nach einem der vorangehenden Ansprüche,
**dadurch gekennzeichnet,**
**dass** die Takteingänge der D-Flip-Flops der zweiten Register aller Registerbänke (26) innerhalb des ersten asynchron getaktete Registerfeldes (8) einen von der Datenstromtrennschaltung (4) abgegebenen getrennten Datenstrom invertiert empfangen.

8. Datenempfangsschaltung nach einem der vorangehenden Ansprüche,
**dadurch gekennzeichnet,**
**dass** die Dateneingänge der D-Flip-Flops des ersten Registers und des zweiten Registers einer Registerbank (26) des asynchron getaktete ersten Registerfeldes (8) mit einem zugehörigen Signalausgang (11) der Verzögerungsgliederkette (27) verbunden sind.

9. Datenempfangsschaltung nach einem der vorangehenden Ansprüche,
**dadurch gekennzeichnet,**
**dass** die Takteingänge der D-Flip-Flops der Register aller Registerbänke (28) innerhalb des zweiten synchron getakteten Registerfeldes (17) das erzeugte Referenztaktsignal empfangen.

10. Datenempfangsschaltung nach einem der vorangehenden Ansprüche,
**dadurch gekennzeichnet,**
**dass** die Dateneingänge der D-Flip-Flops des ersten Registers einer Registerbank (28) in dem zweiten synchron getakteten Registerfeld (17) mit Datenausgängen der D-Flip-Flops des ersten Registers in einer zugehörigen Registerbank (26) in dem ersten asynchron getaktete Registerfeld (8) verbunden sind.

11. Datenempfangsschaltung nach einem der vorangehenden Ansprüche,
**dadurch gekennzeichnet,**
**dass** die Dateneingänge der D-Flip-Flops des zweiten Registers einer Registerbank (28) in dem zweiten synchron getakteten Registerfeld (17) mit Datenausgängen der D-Flip-Flops des zweiten Registers in einer zugehörigen Registerbank (26) in dem ersten asynchron getaktete Registerfeld (8) verbunden sind.

12. Datenempfangsschaltung nach einem der vorangehenden Ansprüche,
**dadurch gekennzeichnet,**
**dass** die Datenausgänge der D-Flip-Flops der Registerbänke (28) des zweiten synchron getakteten Registerfeldes (17) mit der Logikschaltung (18) verbunden sind.

13. Datenempfangsschaltung nach einem der vorangehenden Ansprüche,
**dadurch gekennzeichnet,**
**dass** die Datenstromtrennschaltung (4) aus kaskadenförmig in mehreren Trennstufen verschalteten Datenstromtrennschaltungselementen besteht, wobei die Datenübertragungsrate des seriellen Eingangsdatenstromes mit jeder Trennstufe halbiert wird.

14. Datenempfangsschaltung nach einem der vorangehenden Ansprüche,
**dadurch gekennzeichnet,**
**dass** die Anzahl der getrennten Datenströme 2^{k} beträgt, wobei k die Anzahl der Trennstufen ist.

15. Datenempfangsschaltung nach einem der vorangehenden Ansprüche,
**dadurch gekennzeichnet,**
**dass** die Verzögerungsgliederkette (27) aus mehreren in Reihe geschalteten Invertern mit einstellbarer Signallaufzeit besteht.

16. Datenempfangsschaltung nach einem der vorangehenden Ansprüche,
**dadurch gekennzeichnet,**
**dass** die Anzahl der in Reihe geschalteten Verzögerungsglieder (27-i) gleich dem Verhältnis zwischen der Taktperiode des Referenztaktsignales und der Signallaufzeit eines Verzögerungsgliedes (27-i) ist.

17. Datenempfangsschaltung nach einem der vorangehenden Ansprüche,
**dadurch gekennzeichnet,**
**dass** die Signallaufzeit eines Verzögerungsgliedes (27-i) nicht größer ist als die Zeitdauer eines empfangenen Datenbits des seriellen Eingangsdatenstromes.

18. Datenempfangsschaltung nach einem der vorangehenden Ansprüche,
**dadurch gekennzeichnet,**
**dass** die Signallaufzeit eines Verzögerungsgliedes (27-i) ein Viertel der Zeitdauer eines empfangenen Datenbits des seriellen Eingangsdatenstromes beträgt.

19. Datenempfangsschaltung nach einem der vorangehenden Ansprüche,
**dadurch gekennzeichnet,**
**dass** die Referenztaktsignalerzeugungsschaltung (13) einen niederfrequenten Oszillator aufweist, der mit einer niedrigen Frequenz schwingt, die der Datenübertragungsrate der getrennten Datenströme entspricht.

20. Datenempfangsschaltung nach einem der vorangehenden Ansprüche 1 bis 17,
**dadurch gekennzeichnet,**
**dass** die Referenztaktsignalerzeugungsschaltung (13) einen hochfrequenten Oszillator aufweist, der mit einer hohen Frequenz schwingt, und einen Frequenzteiler, der die hohe Frequenz auf eine niedrige Frequenz teilt, die der Datenübertragungsrate der getrennten Datenströme enspricht.

21. Datenempfangsschaltung nach Anspruch 20,
**dadurch gekennzeichnet,**
**dass** der Oszillator ein spannungsgesteuerter Oszillator ist.

22. Datenstromtrennschaltung nach einem der vorangehenden Ansprüche ,
**dadurch gekennzeichnet,**
**dass** das durch die Referenztaktsignalerzeugungsschaltung (13) erzeugte Referenztaktsignal eine konstante Phasendifferenz zu dem empfangenen seriellen Eingangsdatenstrom aufweist.

23. Datenempfangsschaltung nach einem der vorangehenden Ansprüche,
**dadurch gekennzeichnet,**
**dass** eine Phasendifferenz-Berechnungseinheit vorgesehen ist, die die Phasendifferenz zwischen dem Referenztaktsignal und dem seriellen Eingangsdatenstrom berechnet und ein digitales Phasendifferenzsignal abgibt.

24. Datenempfangsschaltung nach einem der vorangehenden Ansprüche,
**dadurch gekennzeichnet,**
**dass** das digitale Phasendifferenzsignal durch ein digitales Filter (42) zur Signalstabilisierung gefiltert wird.

25. Datenempfangsschaltung nach einem der vorangehenden Ansprüche,
**dadurch gekennzeichnet,**
**dass** das gefilterte digitale Phasendifferenzsignal durch einen Digital/Analog -Wandler (44) in eine analoge Oszillatorsteuerspannung für einen spannungsgesteuerten Oszillator (46) der Referenztaktsignalerzeugungsschaltung (13) umgewandelt wird, wobei der spannungsgesteuerte Oszillator (46) zur Minimierung der Phasendifferenz zwischen dem Referenztaktsignal und dem seriellen Eingangsdatenstrom in Abhängigkeit von der angelegten Oszillatorsteuerspannung mit veränderter Frequenz schwingt.

26. Datenempfangsschaltung nach einem der vorangehenden Ansprüche,
**dadurch gekennzeichnet,**
**dass** die Datenstromtrennschaltung (4) in vier Trennstufen kaskadenförmig verschaltete Datenstromtrennschaltungselemente aufweist,
**dass** die Verzögerungsschaltung (12) vierundsechzig Verzögerungsglieder (27) enthält,
**dass** das erste Registerfeld (8) und das zweite Registerfeld (17) sechzehn Registerbänke aufweist, wobei jede Registerbank zwei Register enthält, die jeweils vierundsechzig D-Flip-Flops umfassen.

27. Datenempfangsschaltung nach einem der vorangehenden Ansprüche,
**dadurch gekennzeichnet,**
**dass** die Signallaufzeit eines Verzögerungsgliedes (27-i) etwa 25 psec beträgt.

## Claims

1. Data reception circuit for receiving a serial input data stream with a high data transfer rate, where the data reception circuit has:
(a) a data stream separation circuit (4) for separating the serial input data stream into a plurality of separate data streams with a reduced data transfer rate;
(b) a reference clock signal generation circuit (13) for generating a reference clock signal whose clock frequency corresponds to the data transfer rate of the separate data streams;
(c) a delay circuit (12) having a delay element chain (27) which comprises a plurality of series-connected delay elements, the first delay element (27-1) in the delay element chain (27) receiving the generated reference clock signal, and each delay element outputting a delayed reference clock signal via a signal output (11) in the delay circuit (12);
(d) a first, asynchronously clocked register array (8),
**characterized in that** the register array comprises a plurality of register banks (26), each register bank (26) in the first register array (8) being asynchronously clocked by an associated separate data stream and reading in the delayed reference clock signals from the delay circuit (12) in order to buffer-store a signal change in the separate data stream;
(e) a second, synchronously clocked register array (17) which comprises a plurality of register banks (28), each register bank (28) in the second register array (17) being synchronously clocked by the reference clock signal and reading in and buffer-storing the register content of an associated register bank (26) in the first register array (8);
(f) and a synchronously clocked logic circuit (18) which evaluates the register content buffer-stored in the second register array (17) in order to reconstruct the serial input data stream.

2. Data reception circuit according to Claim 1,
**characterized**
**in that** each register bank (26) in the first, asynchronously clocked register array (8) has a first register for buffer-storing a rising signal edge in the associated separate data stream, and a second register for buffer-storing a falling signal edge in the associated separate data stream.

3. Data reception circuit according to Claim 2,
**characterized**
**in that** each register bank (28) in the second, synchronously clocked register array (17) has two registers which read in the register content of the two registers in the associated register bank (26) in the first register array (8) upon a rising signal edge in the reference clock signal.

4. Data reception circuit according to one of the preceding claims,
**characterized**
**in that** the registers in the first register array (8) and in the second register array (17) comprise a plurality of edge-triggered D-type flip-flops.

5. Data reception circuit according to one of the preceding claims,
**characterized**
**in that** the number of edge-triggered D-type flip-flops in the registers in the first register array (8) and in the second register array (17) is equal to the number (M) of series-connected delay elements (27-i) in the delay element chain (27).

6. Data reception circuit according to one of the preceding claims,
**characterized**
**in that** the clock inputs of the D-type flip-flops in the first registers in all the register banks (26) within the first, asynchronously clocked register array (8) receive a separate data stream which is output by the data stream separation circuit (4).

7. Data reception circuit according to one of the preceding claims,
**characterized**
**in that** the clock inputs of the D-type flip-flops in the second registers in all the register banks (26) within the first, asynchronously clocked register array (8) receive a separate data stream, which is output by the data stream separation circuit (4), in inverted form.

8. Data reception circuit according to one of the preceding claims,
**characterized**
**in that** the data inputs of the D-type flip-flops in the first register and in the second register in a register bank (26) in the asynchronously clocked first register array (8) are connected to an associated signal output (11) in the delay element chain (27).

9. Data reception circuit according to one of the preceding claims,
**characterized**
**in that** the clock inputs of the D-type flip-flops in the registers in all the register banks (28) within the second, synchronously clocked register array (17) receive the generated reference clock signal.

10. Data reception circuit according to one of the preceding claims,
**characterized**
**in that** the data inputs of the D-type flip-flops in the first register in a register bank (28) in the second, synchronously clocked register array (17) are connected to data outputs of the D-type flip-flops in the first register in an associated register bank (26) in the first, asynchronously clocked register array (8).

11. Data reception circuit according to one of the preceding claims,
**characterized**
**in that** the data inputs of the D-type flip-flops in the second register in a register bank (28) in the second, synchronously clocked register array (17) are connected to data outputs of the D-type flip-flops in the second register in an associated register bank (26) in the first, asynchronously clocked register array (8).

12. Data reception circuit according to one of the preceding claims,
**characterized**
**in that** the data outputs of the D-type flip-flops in the register banks (28) in the second, synchronously clocked register array (17) are connected to the logic circuit (18).

13. Data reception circuit according to one of the preceding claims,
**characterized**
**in that** the data stream separation circuit (4) comprises data stream separation circuit elements connected in cascade form in a plurality of separation stages, the data transfer rate of the serial input data stream being halved with every separation stage.

14. Data reception circuit according to one of the preceding claims,
**characterized**
**in that** the number of separate data streams is 2^{k}, where k is the number of separation stages.

15. Data reception circuit according to one of the preceding claims,
**characterized**
**in that** the delay element chain (27) comprises a plurality of series-connected inverters with an adjustable signal propagation time.

16. Data reception circuit according to one of the preceding claims,
**characterized**
**in that** the number of series-connected delay elements (27-i) is equal to the ratio between the clock period of the reference clock signal and the signal propagation time of a delay element (27-i).

17. Data reception circuit according to one of the preceding claims,
**characterized**
**in that** the signal propagation time of a delay element (27-i) is not greater than the time period of a received data bit in the serial input data stream.

18. Data reception circuit according to one of the preceding claims,
**characterized**
**in that** the signal propagation time of a delay element (27-i) is a quarter of the time period of a received data bit in the serial input data stream.

19. Data reception circuit according to one of the preceding claims,
**characterized**
**in that** the reference clock signal generation circuit (13) has a low-frequency oscillator which oscillates at a low frequency corresponding to the data transfer rate of the separate data streams.

20. Data reception circuit according to one of the preceding Claims 1 to 17,
**characterized**
**in that** the reference clock signal generation circuit (13) has a high-frequency oscillator which oscillates at a high frequency, and a frequency divider which divides the high frequency into a low frequency corresponding to the data transfer rate of the separate data streams.

21. Data reception circuit according to Claim 20,
**characterized**
**in that** the oscillator is a voltage-controlled oscillator.

22. Data reception circuit according to one of the preceding claims,
**characterized**
**in that** the reference clock signal generated by the reference clock signal generation circuit (13) has a constant phase difference with respect to the received serial input data stream.

23. Data reception circuit according to one of the preceding claims,
**characterized**
**in that** a phase difference calculation unit is provided which calculates the phase difference between the reference clock signal and the serial input data stream and outputs a digital phase difference signal.

24. Data reception circuit according to one of the preceding claims,
**characterized**
**in that** the digital phase difference signal is filtered by a digital filter (42) for the purpose of signal stabilization.

25. Data reception circuit according to one of the preceding claims,
**characterized**
**in that** the filtered digital phase difference signal is converted by a digital/analogue converter (44) into an analogue oscillator control voltage for a voltage-controlled oscillator (46) in the reference clock signal generation circuit (13), where the voltage-controlled oscillator (46) oscillates at an altered frequency on the basis of the applied oscillator control voltage in order to minimize the phase difference between the reference clock signal and the serial input data stream.

26. Data reception circuit according to one of the preceding claims,
**characterized**
**in that** the data stream separation circuit (4) has data stream separation circuit elements connected in cascade form, in four separation stages,
**in that** the delay circuit (12) contains sixty-four delay elements (27),
**in that** the first register array (8) and the second register array (17) have sixteen register banks, with each register bank containing two registers which each comprise sixty-four D-type flip-flops.

27. Data reception circuit according to one of the preceding claims,
**characterized**
**in that** the signal propagation time of a delay element (27-i) is approximately 25 psec.s

## Revendications

1. Circuit de réception de données pour recevoir un flux de données d'entrée en série avec une cadence élevée de transmission de données, le circuit de réception de données comportant :
(a) un circuit (4) de séparation du flux de données pour séparer le flux de données d'entrée en série en plusieurs flux de données séparés avec une cadence réduite de transmission des données;
(b) un circuit (13) de production de signal de cadence de référence pour produire un signal de cadence de référence, dont la fréquence de la cadence correspond à la cadence de transmission de données des flux de données séparés;
(c) un circuit de retardement (12) comportant une chaîne (27) de circuits d'éléments de retardement, qui sont constitués par plusieurs éléments de retardement branchés en série, le premier élément de retardement (27-1) de la chaîne (27) d'éléments de retardement recevant le signal de cadence de référence produit, et chaque circuit de retardement délivrant un signal de cadence de référence retardé, par l'intermédiaire d'une sortie de signal (11) du circuit de retardement (12);
(d) un premier ensemble de registres (8) commandé de façon cadencée asynchrone,
**caractérisé en ce que**
l'ensemble de registres est constitué de plusieurs blocs de registres (26), chaque bloc de registres (26) du premier ensemble de registres (8) étant commandé de façon cadencée d'une manière asynchrone par un flux de données séparé associé, et lisant, pour la mémorisation intermédiaire d'un changement de signal du flux de données séparé, les signaux retardés de cadence de référence provenant du circuit de retardement (12);
(e) un second ensemble de registres (17) commandé de façon cadencée synchrone, qui est constitué par plusieurs blocs de registres (28), chaque bloc de registres (28) du second ensemble de registres (17) lisant et mémorisant temporairement le contenu des registres d'un bloc associé de registres (26) du premier ensemble de registres (8), d'une manière commandée de façon synchrone par le signal de cadence de référence;
(f) et un circuit logique (18) commandé de façon cadencée synchrone, qui évalue le contenu de registres, mémorisé temporairement dans la seconde zone de registre (17), pour la reconstitution du flux de données d'entrée série.

2. Circuit de réception de données selon la revendication 1, **caractérisé en ce que** chaque bloc de registres (26) du premier ensemble de registres commandé de façon cadencée asynchrone (8) comporte un premier registre pour la mémorisation temporaire d'un flanc montant des signaux du flux de données séparé associé et un second registre pour la mémorisation temporaire d'un flanc retombant de signal du flux de données séparé associé.

3. Circuit de réception de données selon la revendication 2, **caractérisé en ce que** chaque bloc de registres (28) du second ensemble de registres (17) commandé de façon cadencée synchrone comporte deux registres, qui, dans le cas d'un flanc montant du signal de cadence de référence, lisent le contenu des deux registres du bloc associé de registres (26) du premier ensemble de registres (8).

4. Circuit de réception de données selon l'une des revendications précédentes, **caractérisé en ce que** les registres du premier ensemble de registres (8) et du second ensemble de registres (17) sont constitués par plusieurs bascules bistables de type D déclenchés par les flancs des signaux.

5. Circuit de réception de données selon les revendications précédentes, **caractérisé en ce que** le nombre des bascules bistables de type D, déclenchées par les flancs des signaux, des registres dans le premier ensemble de registres (8) et dans le second ensemble de registres (17) est égal au nombre M des éléments de retardement (27-i), qui sont branchés en série, de la chaîne (27) d'éléments de retardement.

6. Circuit de réception de données selon l'une des revendications précédentes, **caractérisé en ce que** les entrées de cadence des bascules bistables de type D du premier registre de tous les blocs de registres (26) à l'intérieur d'un premier ensemble de registres (8) commandé de façon cadencée asynchrone, reçoivent un flux de données séparé délivré par le circuit (4) de séparation du flux de données.

7. Circuit de réception de données selon l'une des revendications précédentes, **caractérisé en ce que** les entrées de cadence des bascules bistables de type D des seconds registres de tous les blocs de registres (26) à l'intérieur d'un premier ensemble de registres (8) commandé de façon cadencée asynchrone, reçoivent un flux de données séparé, qui est délivré par le circuit (4) de séparation du flux de données.

8. Circuit de réception de données selon l'une des revendications précédentes, **caractérisé en ce que** les entrées de données des bascules bistables de type D du premier registre et du second registre dans le bloc de registres (26) du premier ensemble de registres (8) commandé de façon cadencée asynchrone sont reliés à une sortie associée (11) de signaux de la chaîne (27) d'éléments de retardement.

9. Circuit de réception de données selon l'une des revendications précédentes, **caractérisé en ce que** les entrées de cadence des bascules bistables de type D des registres de tous les blocs de registres (28) à l'intérieur du second ensemble de registres (17), commandé de façon cadencée synchrone, reçoivent le signal de cadence de référence produit.

10. Circuit de réception de données selon l'une des revendications précédentes, **caractérisé en ce que** les entrées de données des bascules bistables de type D du premier registre d'un bloc de registres (28) dans le second ensemble de registres (17) commandé de façon cadencée synchrone sont reliées à des sorties de données des bascules bistables de type D du premier registre dans un bloc de registres associé (26) dans le premier ensemble de registres (8) commandé de façon cadencée asynchrone.

11. Circuit de réception de données selon l'une des revendications précédentes, **caractérisé en ce que** les entrées de données des bascules bistables de type D du second registre d'un bloc de registres (28) dans le second ensemble de registres (17) commandé de façon cadencée synchrone sont reliés à des sorties de données de la bascule bistable de type D du second registre dans un bloc de registres associé (26) dans le premier ensemble de registres (8) commandé de façon cadencée asynchrone.

12. Circuit de réception de données selon l'une des revendications précédentes, **caractérisé en ce que** des sorties de données des bascules bistables de type D des blocs de registres (28) du second ensemble de registres (17) commandé de façon cadencée synchrone sont reliés au circuit logique (18).

13. Circuit de réception de données selon l'une des revendications précédentes, **caractérisé en ce que** le circuit (4) de séparation du flux de données est constitué par des éléments de circuits de séparation du flux de données, qui sont câblés en cascade en formant plusieurs espaces de séparation, la cadence de transmission de données du second flux de données d'entrée en série étant divisée par deux avec chaque étage de séparation.

14. Circuit de réception de données selon l'une des revendications précédentes, **caractérisé en ce que** le nombre des flux séparés de données est égal à 2^{k}, k étant le nombre des étages de séparation.

15. Circuit de réception de données selon l'une des revendications précédentes, **caractérisé en ce que** la chaîne (27) de circuits de retardement est constituée par plusieurs inverseurs branchés en série, qui possèdent des temps de transit réglables des signaux.

16. Circuit de réception de données selon l'une des revendications précédentes, **caractérisé en ce que** le nombre des éléments de retardement (27-i) branchés en série est égal au rapport entre la période de cadence du signal de cadence de référence et le temps de propagation des signaux dans un élément de retardement (27-i).

17. Circuit de réception de données selon l'une des revendications précédentes, **caractérisé en ce que** le temps de propagation des signaux dans un élément de retardement (27-i) n'est pas supérieur à la durée d'un bit de données reçu du flux de données d'entrée en série.

18. Circuit de réception de données selon l'une des revendications précédentes, **caractérisé en ce que** le temps de propagation des signaux dans un élément de retardement (27-i) est égal à un quart de la durée d'un bit de données reçu du flux de données d'entrée en série.

19. Circuit de réception de données selon l'une des revendications précédentes, **caractérisé en ce que** le circuit (13) de production du signal de cadence de référence possède un oscillateur à basse fréquence, qui oscille avec une basse fréquence qui correspond à la cadence de transmission de données des flux séparés de données.

20. Circuit de réception de données selon l'une des revendications précédentes 1 à 17, **caractérisé en ce que** le circuit (13) de production du signal de cadence de référence possède un oscillateur à haute fréquence, qui oscille avec une fréquence élevée, un diviseur de fréquence, qui divise la fréquence élevée pour l'amener à une basse fréquence, qui correspond à la cadence de transmission de données des flux séparés de données.

21. Circuit de réception de données selon la revendication 2, **caractérisé en ce que** l'oscillateur est un oscillateur commandé par la tension.

22. Circuit de séparation de flux de donnés selon l'une des revendications précédentes, **caractérisé en ce que** le signal de cadence de référence produit par le circuit (13) de production du signal de cadence de référence possède une différence de phase constante par rapport au flux de données d'entrée reçu en série.

23. Circuit de réception de données selon l'une des revendications précédentes, **caractérisé en ce qu'**il est prévu une unité de calcul de la différence de phase, qui calcule la différence de phase entre le signal de cadence de référence et le flux de données d'entrée en série et délivre un signal de différence de phase numérique.

24. Circuit de réception de données selon l'une des revendications précédentes, **caractérisé en ce que** le signal de différence de phase numérique est filtré par un filtre numérique (42) pour la stabilisation du signal.

25. Circuit de réception de données selon l'une des revendications précédentes, **caractérisé en ce que** le signal de différence de phase numérique filtré est converti par un convertisseur numérique/analogique (44) en une tension analogique de commande de l'oscillateur pour un oscillateur (46) commandé par la tension du circuit (13) de production du signal de cadence de référence, l'oscillateur (46) commandé par la tension oscillant, pour réduire la différence de phase, entre le signal de cadence de référence et le flux de données d'entrée en série, en fonction de la tension appliquée de commande de l'oscillateur, avec une fréquence modifiée.

26. Circuit de réception de données selon l'une des revendications précédentes, **caractérisé en ce**
**que** le circuit (4) de séparation du flux de données comporte des éléments de circuits de séparation du flux de courant qui sont câblés en cascade selon quatre étages de séparation,
**que** le circuit de retardement (12) contient soixante-quatre éléments de retardement (27),
**que** le premier ensemble de registres (8) et le second ensemble de registres (17) comportent seize blocs de registres, chaque bloc de registres contenant deux registres, qui comprennent chacun soixante-quatre bascules bistables de type D.

27. Circuit de réception de données selon l'une des revendications précédentes, **caractérisé en ce que** le temps de propagation des signaux dans un élément de retardement (24-i) est égal à 25 ps.
